Europäisches Patentamt

European Patent Office

Office européen des brevets

(19)

(11) Publication number: **0 018 024**
A1

(12)

# EUROPEAN PATENT APPLICATION

(21) Application number: **80200248.5**

(22) Date of filing: **20.03.80**

(51) Int. Cl.³: **B 01 J 10/00,** B 01 D 47/06,
B 01 F 5/06

(30) Priority: **21.04.79 EG 24179**

(43) Date of publication of application: **29.10.80**
**Bulletin 80/22**

(84) Designated Contracting States: **DE FR GB**

(71) Applicant: **Sabry, Hosein Kamel, Abdel Fattah, Dr., Kafr
El-Zayat (EG)**
Applicant: **SOCIETE FINANCIERE ET INDUSTRIELLE D'
EGYPT S.A.A., Kafr El-Zayat (EG)**

(72) Inventor: **Kamel, Abdel Fattah Sabry Hosein, Dr., Kafr
El-Zayat (EG)**

(74) Representative: **Pirson, Jean et al, c/o Bureau Gevers 7,
rue de Livourne, Boîte no 1, B-1050 Bruxelles (BE)**

(54) **Tower for contacting and intimately mixing gases and liquids.**

(57) Tower for contacting gases with liquides, charac-
terised in that it is provided with a double venturi system
in the zone of contact between gases and liquids, said
zone being provided with a first barrier (D) with a narrow
bottleneck opening ($N_1$) to creating a first vortex action
in the mixture of gases and liquids to be well mingled,
and a second barrier (E) with a narrow bottleneck open-
ing ($N_2$) on the opposite side of the first bottleneck to
create a second vortex action achieving a thorough mingling of the gases with the liquids.

1         0018024

This invention relates to an improved apparatus for effecting a good contact between gases and liquids.

In many chemical processes, such as reactions between gases and liquids, purification of gases by absorbing contaminants therein in liquids, and the like, it is necessary to have a good contact between gases and liquids. In the past, baffles, trays and the like were used to enhance the contact between gases and liquids.

Recently venturi systems have been used in towers to improve the contact between gases and liquids. Now according to the present invention, it has been discovered that a double venturi can be introduced in the towers for contacting gases and liquids to significantly increase their efficiency and effect a better contact between gases and liquids, this increasing the rate of absorption and/or reaction.

The apparatus according to the present invention is very simple and substantially increases the efficiency of the present venturi systems in current use.

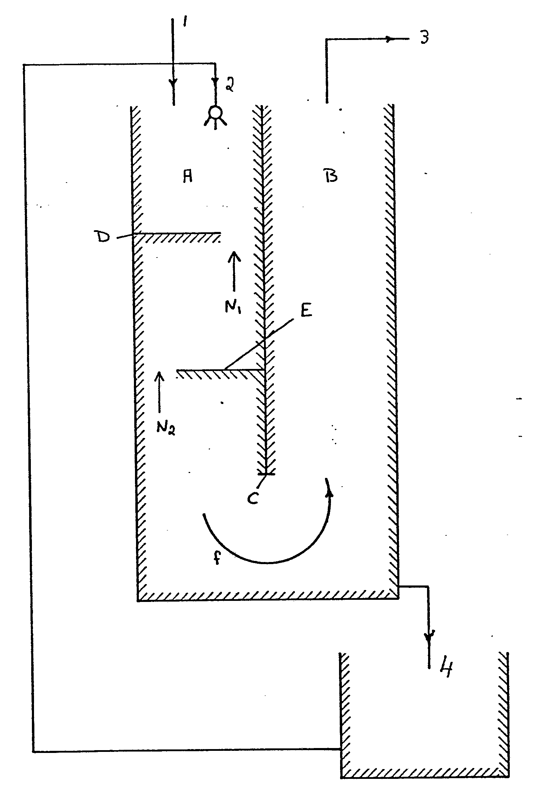

For a better understanding of the present invention an embodiment thereof will be described with reference to the accompanying drawing which represents a longitudinal section of a tower with a double venturi system for contacting gases with liquids in accordance with the present invention.

Referring to the drawing, gases enter from line 1 into the tower wherein they are sprayed with liquids from atomiser (2) in the tower. The tower is divided into two sections (A) and (B) near its generatrix C.

In section A the mixture of gases and liquids flows until it strikes a first barrier (D) causing the creation of a venturi action wherein the gases and liquids take the form a vortex and mingle with each other thoroughly and the mixture of gases and liquids escapes from the narrow bottleneck $(N_1)$ between the edge barrier (D) and the generatrix (C) to flow into a second vortex

2

0018024

until it strikes the second barrier (E) whence it escapes through the second bottleneck $(N_2)$ on the opposite side of the first bottleneck $(N_1)$, thus creating a pumping vortex action to enchance greatly mingling of the gases with the liquids. Then the mixture flows downwards to enter into the second section (B) wherein the gases flow upwards in the direction shown by the arrow (f) to be discharged through line (3) while the liquids are discharged from the bottom of the tower through line (4)

From the above description it is obvious that the double venturi system according to the present invention provides for considerable savings in the costs of construction of towers of this kind and is suitable for all chemical processes that require good contact between gases and liquids.

## CLAIMS

1. Tower for contacting gases with liquids, characterised in that it is provided with a double venturi system in the zone of contact between gases and liquids, said zone being provided with a first barrier with a narrow bottleneck opening to creating a·first vortex action in the mixture of gases and liquids to be well mingled, and a second barrier with a narrow bottleneck opening on the opposite side of the first bottleneck to create a second vortex action achieving a thorough mingling of the gases with the liquids.

2. Tower according to claim 1, characterized in that it is provided with more than one venturi system.

1/1

0018024

European Patent Office

**EUROPEAN SEARCH REPORT**

0018024

Application number

EP 80 20 0248

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| | CH - A - 564 966 (FR. SAUTER)<br>* Column 1, lines 1-5, 44-50; column 1, line 56 - column 2, line 66; column 3, line 64 - column 4, line 2; figures 1, 5a,5b * | 1,2 | B 01 J 10/00<br>B 01 D 47/06<br>B 01 F  5/06 |
| | -- | | |
| | US - A - 3 526 391 (M.W. CHURCH)<br>* Abstract; column 1, lines 45-54; column 2, line 2 - column 3, line 47; figures 1-4 * | 1,2 | |
| | -- | | TECHNICAL FIELDS SEARCHED (Int.Cl. ³) |
| | US - A - 2 965 695 (C.A. SLEICHER Jr.)<br>* Column 1, lines 15-32; column 1, lines 72 - column 2, line 29; column 2, line 39 - column 3, line 2; figures 1-4 * | 1,2 | B 01 D  3/26<br>       47/06<br>       47/10<br>       51/10<br>       53/18<br>B 01 F  5/00<br>       5/06<br>B 01 J 10/00<br>F 28 C  3/06<br>       3/08 |
| | -- | | |
| | US - A - 2 125 245 (H. S. McGRAY)<br>* Page 1, column 1, lines 1-6; column 1, line 23 - column 2, line 16 ; figures 1-5 * | 1,2 | |
| | -- | | CATEGORY OF CITED DOCUMENTS |
| | US - A - 3 119 704 (B.R. HARRELL et al. )<br>* Column 1, lines 32-55; column 2, lines 45-72; figure 2 * | 1,2 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | -- | | |
| A | FR - A - 1 373 735 (THE BABCOCK & WILCOX COMP.) | 1,2 | |
| | ---- | | &: member of the same patent family, corresponding document |

| X | The present search report has been drawn up for all claims | | |
|---|---|---|---|
| Place of search | Date of completion of the search | Examiner | |
| The Hague | 25-07-1980 | SIEM | |

EPO Form 1503.1   06.78